Europäisches Patentamt

European Patent Office

Office européen des brevets

(11) Veröffentlichungsnummer: **0 508 200 A1**

## EUROPÄISCHE PATENTANMELDUNG

(21) Anmeldenummer: **92104964.9**

(22) Anmeldetag: **23.03.92**

(51) Int. Cl.5: **A01D 78/10, A01D 80/00**

(30) Priorität: **12.04.91 DE 4111970**

(43) Veröffentlichungstag der Anmeldung:
**14.10.92 Patentblatt 92/42**

(84) Benannte Vertragsstaaten:
**AT CH DE FR GB IT LI NL SE**

(71) Anmelder: **CLAAS SAULGAU GMBH**
**Postfach 1154**
**W-7968 Saulgau(DE)**

(72) Erfinder: **Jakobi, Wilhelm**
**Mühlstrasse 32**
**W-7968 Saulgau-Bogenweiler(DE)**

(54) **Kreiselheuer.**

(57) Ein Kreiselschwader mit einem umlaufenden Arbeitswerkzeug besitzt ein Fahrwerk mit vier Laufrädern (19), von denen je zwei an einer um eine in Fahrtrichtung liegende Achse (14) pendelbaren Doppelschwinge (16) gelagert sind.

Die Laufräder (19) sind entweder starr oder als sogenannte Nachlaufräder an den Doppelschwingen (16) gelagert.

Der Sinn dieser Ausführung besteht in der Erzielung einer besseren Bodenanpassung und in einem ruhigeren Lauf der Maschine.

Fig. 2

EP 0 508 200 A1

Die Erfindung bezieht sich auf einen Kreiselheuer wie beispielsweise Kreiselschwader nach dem Oberbegriff des Hauptanspruches.

Kreiselheuer dieser Art sind z. B. aus einem Prospekt der Firma Krone betreffend "CIRKELHARK KS" mit Druckvermerk La. 60969.2.12.89 bekannt. Das vierrädrige Fahrwerk solcher Maschinen dient dazu, diese in der Betriebsstellung gegenüber dem Boden abzustützen, und die Arbeitswerkzeuge in gleichmäßigem, geringem Abstand über den Boden zu führen. Wenn jedoch die beiden Laufräder einer Doppelschwinge gemeinsam über eine örtliche Bodenunebenheit laufen, was beispielsweise bei schräg oder quer zur Fahrtrichtung liegenden Bodenwellen der Fall ist, überträgt sich deren gemeinsame Höhenbewegung verstärkt auf die seitlich von Ihnen befindlichen Arbeitswerkzeuge. Diese heben sich dabei stärker vom Boden ab, als es der Bodenunebenheit entspricht. Beim Durchfahren einer Mulde tritt der gegenteilige Effekt ein und die Arbeitswerkzeuge dringen in den Boden ein.

Diesen Nachteil schlechter Bodenanpassung zu vermeiden und die Maschine bei allen Bodenunebenheiten ruhig und damit stoßfrei zu führen, ist die Aufgabe dieser Erfindung.

Dieses Ziel wird dadurch erreicht, daß bei einem Fahrwerk nach dem Gattungsbegriff des Patentanspruches 1 die zwei Laufräder jeder Doppelschwinge in Fahrtrichtung hintereinander an der um die Längsachse pendelbaren Doppelschwinge gelagert sind. Wenn jetzt z. B. ein vorderes Laufrad über eine örtliche Bodenunebenheit rollt, dann hebt sich eine Fahrwerkshälfte nur etwa um den halben Betrag der Bodenunebenheit. Da sich, wie bei den bekannten Maschinen, die Arbeitswerkzeuge etwa doppelt so hoch anheben als eine Fahrwerkshälfte folgen die Spitzen der Arbeitswerkzeuge einer Bodenunebenheit nunmehr fast genau.

In den Ansprüchen 1 - 5 werden räumlich und kostenmäßig besonders günstige Ausführungsformen beansprucht.

In der Kurvenfahrt müssen in unterschiedlichem Abstand zur Schwenkachse der Maschine starr angeordnete Räder zwangsläufig einen Schlupf zum Boden haben. Besonders bei kurzem Maschinenrahmen kann es deshalb zweckmäßig sein, zwei der Laufräder als Nachlaufräder auszubilden. Wenn alle vier Laufräder nachlaufen können, sind sie auch bei einer starr mit einem Schlepper verbundenen Maschine verwendbar, ohne ihre anderen Vorteile zu verlieren.

In Anspruch 9 wird eine Ausführung beansprucht, die insbesondere für den Straßentransport vorteilhaft ist.

Zwei Ausführungsbeispiele werden nachstehend beschrieben und durch vier Abbildungen erläutert.

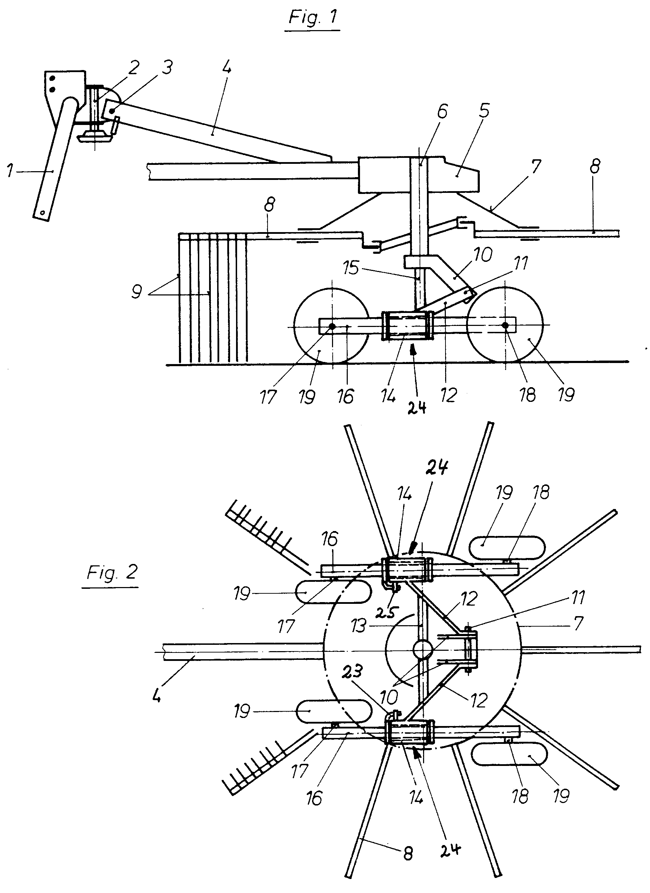

Figur 1    zeigt einen Kreiselheuer von der Seite,

Figur 2    zeigt den gleichen Gegenstand von oben,

Figur 3    zeigt eine andere Ausführung für das Fahrwerk eines Kreiselheuers von der Seite,

Figur 4    den gleichen Gegenstand von oben.

An einem Dreipunktrahmen (1) ist um eine senkrechte Achse (2) und eine waagrechte Achse (3) ein Rahmen (4) eines Kreiselheuers schwenkbar angelenkt. Aus einem Getriebegehäuse (5) führt eine Tragachse (6) nach unten. Auf ihr ist ein Arbeitskreisel dreh- und antreibbar gelagert, der aus einem Teller (7), Zinkenarmen (8) und Rechenzinken (9) besteht.

Am unteren Ende der Tragachse (6) ist ein Radträger (10) befestigt, der an seinem freien Ende eine horizontale Schwenkachse (11) aufnimmt. An der Schwenkachse (11) sind Träger (12) drehbar gelagert, die ihrerseits durch eine Querstrebe (13) starr miteinander verbunden sind. Die Träger (12) sind an ihrem freien Ende an Büchsen (14) mit in Fahrtrichtung verlaufender Längsachse (14) angeschlossen. Auf die Querstrebe (13) wirkt ein Druckstab (15) ein, der die Tragachse (6) durchsetzt und der durch nicht dargestellte Mittel zur Höhenverstellung der Maschine nach oben oder unten bewegt werden kann.

In den Büchsen (14) sind Doppelschwingen (16) um ihre Längsachsen schwenkbar gelagert. Sie haben an ihrem vorderen Ende nach innen gerichtete Achszapfen (17) und an ihrem hinteren Ende nach außen gerichtete Achszapfen (18). Auf ihnen sind Laufräder (19) gelagert. Der Ausschlag der Doppelschwingen (16) wird durch Anschläge (23, 25) begrenzt, die aus einem am Umfang der Büchsen (14) vorgesehenen Schlitzblech (25) und einem mit den Doppelschwingen (16) verbundenen und in den Schlitz der Schlitzbleche (25) eingreifenden Hakenbolzen (23) bestehen können.

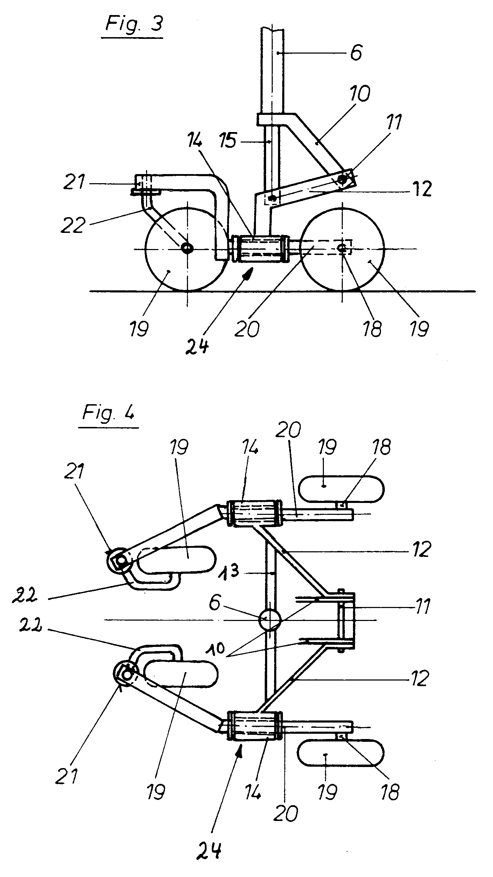

Bei einer anderen Ausführungsform (Figuren 3 und 4) sind die Doppelschwingen (20) zur Aufnahme von je einem starren Laufrad (19) und einem Nachlaufrad (19, 22) ausgerüstet. Die in den Büchsen (14) gelagerten Doppelschwingen (20) tragen an ihrem hinteren Ende Achszapfen (18), auf denen Laufräder (19) gelagert sind. An ihrem vorderen Ende haben sie ein Kopflager (21) mit einer senkrechten Bohrung. Die Kopflager (21) werden von einer gekrümmten Nachlaufachse (22) durchsetzt, die ihrerseits auf einem waagrechten Ende ein Laufrad (19) trägt.

Zum Betrieb werden mittels des Druckstabes (15) die Träger (12) und mit ihnen die Doppelschwingen (16, 20) so weit abgesenkt, daß die Enden der Rechzinken (9) dicht über dem Boden umlaufen. Wenn eines der Laufräder (19) über eine Bodenunebenheit läuft, wird die zugehörige Doppelschwinge (16, 20) angehoben und die zugehörige waagrechte Büchse (14) hebt sich um etwa die Hälfte der Höhe der Bodenunebenheit an. Da die Rechzinken (9) ihrerseits außerhalb der Radspur liegen, heben sie sich um etwa den Betrag der Bodenunebenheit an und behalten so ihren relativen Abstand zum Boden.

**Patentansprüche**

1. Kreiselheuer wie Kreiselschwader mit mindestens einem, um eine etwa senkrechte Achse umlaufenden Arbeitswerkzeug und einem darunter angeordnetem Fahrwerk, das vier Laufräder besitzt, von denen je zwei an einer, um eine etwa horizontal und längs zur Fahrtrichtung liegende Achse pendelbar gelagerten Doppelschwinge auf gegenüberliegenden Seiten der Pendelachse angeordnet sind, dadurch gekennzeichnet, daß die zwei Laufräder (19) jeder Doppelschwinge (16, 20) in Fahrtrichtung hintereinander an der um die Längsachse (14) pendelbaren Doppelschwinge (16, 20) gelagert sind.

2. Kreiselheuer nach dem Gattungsbegriff des Anspruches 1, dadurch gekennzeichnet, daß die zwei Laufräder (19) jeder Doppelschwinge (16, 20) in Fahrtrichtung hintereinander und auf gegenüberliegenden Seiten der Doppelschwinge (16, 20) gelagert sind.

3. Kreiselheuer nach den Ansprüchen 1 und 2, dadurch gekennzeichnet, daß die Doppelschwingen (16, 20) in ihrem Lagerbereich (24) rund gestaltet und mit diesem Teil koaxial mit den Pendelachsen (14) gelagert sind.

4. Kreiselheuer nach einem der Ansprüche 1 - 3, dadurch gekennzeichnet, daß die in Fahrtrichtung vorderen Laufräder (19) an der Innenseite einer Doppelschwinge (16) angeordnet sind.

5. Kreiselheuer nach einem der Ansprüche 1 - 4, dadurch gekennzeichnet, daß die Laufräder (19) an starr mit einer Doppelschwinge (16) verbundenen Achszapfen (17, 18) gelagert sind.

6. Kreiselheuer nach einem der Ansprüche 1 - 3, dadurch gekennzeichnet, daß ein Laufrad (19) an einem starr mit einer Doppelschwinge (20) verbundenen Achszapfen (18) gelagert ist, während ein zweites Laufrad (19) als sogenanntes Nachlaufrad (19, 22) um eine etwa senkrechte Achse schwenkbar mit der Doppelschwinge (20) verbunden ausgeführt ist.

7. Kreiselheuer nach Anspruch 6, dadurch gekennzeichnet, daß die Nachlaufräder (19, 22) in Fahrtrichtung vor den starr angeordneten Laufrädern (19) angeordnet sind.

8. Kreiselheuer nach einem der Ansprüche 1 - 3, dadurch gekennzeichnet, daß alle Laufräder als Nachlaufräder (19, 22) ausgeführt sind.

9. Kreiselheuer nach einem der Ansprüche 1 - 8, dadurch gekennzeichnet, daß der Pendelweg der Doppelschwingen (16, 20) durch Anschläge (23, 25) begrenzt ist.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 332 835 (CLAAS SAULGAU GMBH)<br>* das ganze Dokument *<br>--- | 1,2,4-8 | A01D78/10<br>A01D80/00 |
| A | DE-A-4 003 202 (ALLOIS PÖTTINGER LANDMASCHINEN-GESELLSCHAFT MBH)<br>* Seite 2, Zeile 53 - Zeile 64; Abbildungen 2,3 *<br>--- | 1,2,5 | |
| A | DE-U-8 910 415 (H. NIEMEYER SÖHNE GMBH & CO KG)<br><br>----- | | |

**RECHERCHIERTE SACHGEBIETE (Int. Cl.5)**

A01D

Der vorliegende Recherchenbericht wurde für alle Patentansprüche erstellt

| Recherchenort | Abschlußdatum der Recherche | Prüfer |
|---|---|---|
| BERLIN | 15 JUNI 1992 | MERCKX A. |